# EUROPEAN PATENT SPECIFICATION

(11) **EP 2 613 396 B1**
(45) Date of publication and mention of the grant of the patent: **27.09.2017**
(21) Application number: 11821568.0
(22) Date of filing: 18.08.2011
(51) Int. Cl.: H01M 10/0569, H01M 4/62, H01M 10/052, H01M 10/0567, H01M 10/0585, H01M 4/02

(54) **SECONDARY BATTERY AND SECONDARY BATTERY ELECTROLYTE USED THEREIN**
SEKUNDÄRBATTERIE UND DARIN VERWENDETES SEKUNDÄRBATTERIE-ELEKTROLYT
BATTERIE SECONDAIRE ET ÉLECTROLYTE DE BATTERIE SECONDAIRE UTILISÉE DANS LADITE BATTERIE

(30) Priority: 02.09.2010 JP 2010196617
(43) Date of publication of application: 10.07.2013
(73) Proprietor: NEC Corporation, Tokyo 108-8001 (JP)
(72) Inventor: MATSUMOTO, Kazuaki, Tokyo 108-8001 (JP); KAWASAKI, Daisuke, Tokyo 108-8001 (JP)
(74) Representative: Glawe, Delfs, Moll
(86) International application number: PCT/JP2011/068681
(87) International publication number: WO 2012/029551

(56) References cited:
- EP-A1- 0 704 922
- WO-A1-2010/030008
- WO-A1-2010/050507
- JP-A- 8 111 238
- JP-A- 2000 195 544
- JP-A- 2001 283 908
- JP-A- 2003 173 819
- JP-A- 2005 071 678
- JP-A- 2007 115 583
- JP-A- 2007 504 628
- JP-A- 2008 027 837
- JP-B2- 3 961 597

## Description

### TECHNICAL FIELD

The present invention relates to a secondary battery and an electrolyte for use in the secondary battery. More particularly, the present invention relates to a lithium ion secondary battery and an electrolyte for use in such a lithium ion secondary battery.

### BACKGROUND ART

A secondary battery having high energy density is needed as the markets of notebook computer, mobile phone, electric vehicle and the like are rapidly expanded. As a method for obtaining a secondary battery having high energy density, there has been known a method of using a high capacity negative electrode material, a method of using a non-aqueous electrolyte having good stability, or the like.

Silicon oxides or silicates used as a negative electrode active material for a secondary battery are disclosed in Patent Document 1. A negative electrode for a secondary battery provided with an active material layer comprising carbonaceous particles capable of occluding and releasing lithium ions, metal particles capable of alloying with lithium and oxide particles capable of occluding and releasing lithium ions is disclosed in Patent Document 2. A negative electrode material for a secondary battery is disclosed in Patent Document 3 in which the surfaces of particles having a structure with silicon micro-crystals dispersed in a silicon compound are coated with carbon.

A non-aqueous electrolyte comprising fluorine-containing phosphoric acid esters having the structure represented below is disclosed in Patent Document 4.

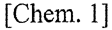

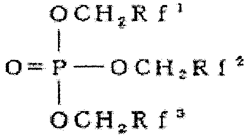

(In the formula above, Rf¹, Rf² and Rf³ may be the same or different, and all of these are fluorine-containing alkyl groups having 1-3 carbon atoms.)

### [Prior Art Documents]

### [Patent Documents]

Patent Document 1: JP Patent Application Publication No. Hei 6-325765
Patent Document 2: JP Patent Application Publication No. 2003-123740
Patent Document 3: JP Patent Application Publication No. 2004-47404
Patent Document 4: JP Patent Application Publication No. 2008-21560
Patent Document 5: JP Patent Application Publication No. 2004-22433
Patent Document 6: JP Patent Application Publication No. 2007-95670

JP patent application publication 2000-195544 discloses a secondary battery comprising a carbon material as the negative electrode active material and a nonaqueous electrolyte containing a halogen substituted cyclic carbonate and a phosphate compound.

The patent application publications JP 2003-173819 and WO 2010/030008 A1 disclose various secondary batteries wherein the electrolytes comprise some phosphoric acid ester compounds in various proportions.

### SUMMARY OF THE INVENTION

### Problems to be solved by the invention

However, a secondary battery using silicon oxides disclosed in Patent Document 1 as a negative electrode active material has a problem that the temperature of secondary battery is increased when it is subjected to a strong impact from external circumstances. The negative electrode for a secondary battery disclosed in Patent Document 2 has the effect of relieving a change in volume throughout the negative electrode when occluding and releasing lithium due to differences in charge-discharge potentials of three components. However, a relationship of coexistent three components, and a bonding agent, an electrolyte, an electrode element structure and an outer casing which are necessarily needed to form a lithium ion secondary battery were not fully investigated in Patent Document 2. The negative electrode material for a secondary battery disclosed in Patent Document 3 has also the effect of relieving a change in volume throughout the negative electrode. However, a bonding agent, an electrolyte, an electrode element structure and an outer casing which are necessarily needed to form a lithium ion secondary battery were not fully investigated in Patent Document 3. Further, there was a problem that the temperature of battery is dramatically elevated when it is subjected to a strong impact from external circumstances.

Non-aqueous electrolytes disclosed in Patent Document 4 have been used for non-combustibility and oxidation resistance. However, insufficient discharge property showing when using certain negative electrode materials as an active material was not fully confirmed. Further, a negative electrode active material, an electrode element structure and an outer casing which are necessary for forming a lithium ion secondary battery were not fully investigated in Patent Document 4.

In Patent Documents 5 and 6, a negative electrode active material, an electrode element structure and an outer casing which are necessary for forming a lithium ion secondary battery were not fully investigated, as well as a state of negative electrode active material was not fully investigated

Accordingly, it is an object of the present invention to provide a secondary battery having high capacity and good thermal stability as a lithium ion secondary battery using a high energy type negative electrode and a secondary battery electrolyte used therein.

A secondary battery according to the present invention is a secondary battery as defined in claim 1, ie. a secondary battery comprising an electrode element having a positive electrode and a negative electrode opposed each other,an electrolyte and an outer casing containing said electrode element and said electrolyte, characterized in that said negative electrode comprises a negative electrode active material, which includes a metal (a) capable of alloying with lithium, a metal oxide (b) capable of occluding and releasing lithium ions and a carbon material (c), is bonded to a negative electrode current collector by a negative electrode bonding agent, said electrolyte comprises 70-99 vol% of a phosphoric acid ester compound and 1-15 vol% of a fluorinated carbonate compound, and said phosphoric ester compound comprises triethyl phosphate, and said fluorinated carbonate compound comprises fluoroethylene carbonate.

### EFFECTS OF THE INVENTION

According to the present invention, it can be provided a lithium ion secondary battery using a high energy type negative electrode having high capacity and good thermal stability.

### BRIEF DESCRIPTION OF THE DRAWINGS

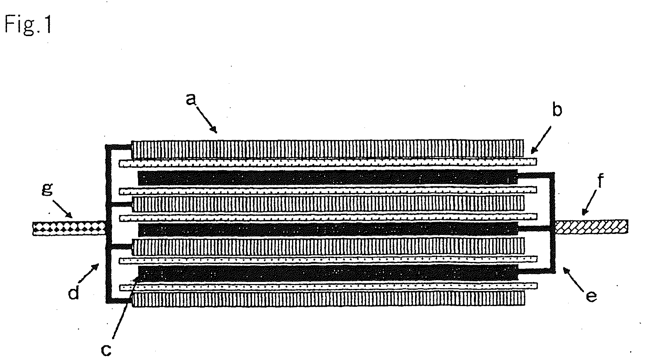

Figure 1 is a schematic cross-sectional view showing an electrode element structure of a layered laminate type secondary battery as an embodiment of a secondary battery according to the present invention.

### The description of reference marks

a: negative electrode
b: separator
c: positive electrode
d: negative electrode current collector
e: positive electrode current collector
f: positive electrode terminal
g: negative electrode terminal

### DESCRIPTION OF EMBODIMENTS

Hereinafter, the present invention will be described in detail.

A secondary battery according to the present invention comprises an electrode element having a positive electrode and a negative electrode opposed each other and an electrolyte, which are contained in an outer casing. A shape of the secondary battery may be any one of cylindrical, planar winding rectangular, layered rectangular, coin, planar winding laminate and layered laminate, and a layered laminate is preferred. Hereinafter, a layered laminate type secondary battery will be described.

Figure 1 is a schematic cross-sectional view showing an electrode element structure of a layered laminate type secondary battery. The electrode element has a plurality of positive electrodes (c) and negative electrodes (a) stacked alternately onto each other, separators (b) being placed between positive electrodes and negative electrodes. Each of positive electrodes (c) has a positive electrode current collector (e). The positive electrode current collectors are electrically connected each other via welding at an end without coating with a positive electrode active material, and a positive electrode terminal (f) is also welded at the welding point. Each of negative electrodes (a) has a negative electrode current collector (d). The negative electrode current collectors are electrically connected each other via welding at an end without coating with a negative electrode active material, and a negative electrode terminal (g) is also welded at the welding point.

Since electrode elements of such a plane shape layered structure have no area where R is small, that means that they have no area close to the winding core of a rolling structure, they have an advantage that the volume of electrode is not subjected to adverse affect due to charge/discharge as compared with electrode elements having a rolling structure. Therefore, it is effective for an electrode element using active materials that promote a volume expansion. To the contrary, an electrode element having a rolling structure may facilitate a distortion in the structure since the electrode has a curved portion. In particular, if a negative electrode active material showing high volume change during charge/discharge such as silicon oxides is used, a secondary battery using an electrode element having a rolling structure shows a considerable decrease in capacity during charge/discharge.

However, in cases of electrode elements having a plane laminate structure, there is a problem that gases generated between electrodes may remain in that place. This is because a distance between electrodes may easily become wide in electrode elements having a laminate structure, while a distance between electrodes is hard to be widened due to tension applied to electrodes in electrode elements having a rolling structure. When using a laminate film of aluminum in an outer casing, this problem is particularly significant.

Further, if the outer casing is an aluminum laminate film, the casing has lower strength than a stainless steel plate or an aluminum plate. Therefore, the increased temperature of secondary battery is frequently shown when it is subjected to a strong impact from external circumstances.

According to the present invention, the above-mentioned problem can be solved, as well as high capacity and good thermal stability can be achieved for a layered laminate type lithium ion secondary battery using a high energy type negative electrode.

### [1] Negative electrode

The negative electrode comprises a negative electrode active material bonded to a negative electrode current collector by a negative electrode bonding agent. According to the present invention, the negative electrode active material comprises a metal (a) capable of alloying with lithium, a metal oxide (b) capable of occluding and releasing lithium ions and a carbon material (c).

As the metal (a), Al, Si, Pb, Sn, In, Bi, Ag, Ba, Ca, Hg, Pd, Pt, Te, Zn, La, or an alloy of two or more metals among these may be used. Particularly, the metal (a) is preferred to include silicon (Si). A content of the metal (a) in the negative electrode active material may be 0wt% or 100wt%, but the content is preferably not less than 5wt% and not more than 95wt%, more preferably not less than 10wt% and not more than 90wt%, and still more preferably not less than 20wt% and not more than 50wt%.

As the metal oxide (b), a silicon oxide, an aluminum oxide, a tin oxide, an indium oxide, a zinc oxide, a lithium oxide, or any composite thereof may be used. Particularly, the metal oxide (b) is preferred to include a silicon oxide. This is because silicon oxides are not well reacted with other compounds since silicon oxides are relatively stable. In addition, to the metal oxide (b), one or two or more elements selected from nitrogen, boron and sulfur may be added at an amount such as 0.1-5wt%. As a result, the electrical conductivity of metal oxide (b) may be increased. A content of the metal oxide (b) in the negative electrode active material may be 0wt% or 100wt%, but the content is preferably not less than 5wt% and not more than 90wt%, more preferably not less than 40wt% and not more than 80wt%, and still more preferably not less than 50wt% and not more than 70wt%.

Preferably, the metal oxide (b) has partially or entirely amorphous structures. If the metal oxide (b) has amorphous structures, the volume expansion of the carbon material (c) as another negative electrode active material or the metal (a) may be suppressed. Although a mechanism has not been clearly elucidated, it is presumed that the amorphous structures of metal oxide (b) would play a role in the formation of an interface film between carbon material (c) and an electrolyte. In addition, it is believed that amorphous structures have relatively few problems caused by unevenness such as grain boundaries or defects. Whether the metal oxide (b) has partially or entirely amorphous structures may be confirmed by an X-ray diffraction method that is a general XRD method. In detail, if metal oxide (b) has no amorphous structure, intrinsic peaks for metal oxide (b) are observed, while if metal oxide (b) has partially or entirely amorphous structures, the observed intrinsic peaks for metal oxide (b) become broad.

Furthermore, when the negative electrode active material comprises the metal (a) and the metal oxide (b), the metal (a) preferably is partially or entirely dispersed in the metal oxide (b). By dispersing at least some of the metal (a) in the metal oxide (b), a volume expansion throughout the negative electrode may be more suppressed and the decomposition of electrolyte may be suppressed. Whether the metal (a) is partially or entirely dispersed in the metal oxide (b) may be confirmed by using energy dispersive X-ray spectroscopy that is a general EDX method in combination with a transmission electron microscope that is a general TEM method. In detail, it may be confirmed that a metal constituting the metal (a) does not comprise an oxide by observing the cross-section of a sample comprising the metal (a) particles and determining the oxygen concentration of the metal (a) particles dispersed in the metal oxide (b).

Further, when the negative electrode active material comprises the metal (a) and the metal oxide (b), the metal oxide (b) is preferably an oxide of metal constituting the metal of (a).

An negative electrode active material which comprises metal (a), metal oxide (b) and carbon material (c) and the metal oxide (b) has partially or entirely amorphous structures and the metal (a) is partially or entirely dispersed in the metal oxide (b) may be prepared, for example using a method as disclosed in Patent Document 3. In detail, a composite whose surface is coated with the carbon material (c) and in which metal (a) in metal oxide (b) forms nanoclusters may be obtained by CVD treating metal oxide (b) under an atmosphere comprising organic gases such as methane. The aforementioned negative electrode active material may also be prepared by mixing carbon material (c), metal (a) and metal oxide (b) by means of mechanical milling.

When the negative electrode active material comprises the metal (a) and the metal oxide (b), the ratios of the metal (a) and the metal oxide (b) are not particularly limited. Preferably, the metal (a) is not less than 5wt% and not more than 90wt% with respect to the sum of the metal (a) and the metal oxide (b), and preferably not less than 30wt% and not more than 60wt%. Preferably, the metal oxide (b) is not less than 10wt% and not more than 95wt% with respect to the sum of the metal (a) and the metal oxide (b), and preferably not less than 40wt% and not more than 70wt%.

The negative electrode active materials comprise a carbon material (c). As the carbon material (c), carbons, amorphous carbons, diamond-like carbons, carbon nanotubes, or any composite thereof may be used. Among these, the carbons of high crystallinity shows high electrical conductivity, good adhesion to a negative electrode current collector made of a metal such as copper, and good voltage flatness. To the contrary, the amorphous carbons of low crystallinity show relatively low volume expansion and therefore they have an effect of relieving a volume expansion throughout a negative electrode and also may avoid deterioration due to a negative electrode unevenness such as grain boundaries or defects. A content of the carbon material (c) in the active material may be 0wt%, but the content is preferably not less than 2wt% and not more than 50wt%, and more preferably not less than 2wt% and not more than 30wt%.

The negative electrode active material comprises the metal (a), the metal oxide (b) and the carbon material (c). When the negative electrode active material comprises the metal (a), the metal oxide (b) and the carbon material (c), the ratios of the metal (a), the metal oxide (b) and the carbon material (c) are not particularly limited. The metal (a) is preferably not less than 50 wt% and not more than 90 wt% based on the sum of the metal (a), the metal oxide (b) and the carbon material (c), and more preferably not less than 20 wt% and not more than 50 wt%. The metal oxide (b) is preferably not less than 5 wt% and not more than 90 wt% based on the sum of the metal (a), the metal oxide (b) and the carbon material (c), and more preferably not less than 40 wt% and not more than 70 wt%. The carbon material (c) is preferably not less than 2 wt% and not more than 50 wt% based on the sum of the metal (a), the metal oxide (b) and the carbon material (c), and more preferably not less than 2 wt% and not more than 30 wt%.

Further, metal (a), metal oxide (b) and carbon material (c) are not particularly limited, but each of these may be used in the form of particles. For example, as the metal (a), a metal having an average particle size smaller than average particle sizes of carbon material (c) and metal oxide (b) may be used. Therefore, the metal (a) having large volume change upon charging/discharging has relatively small particle size, and the metal oxide (b) or the carbon material (c) having low volume change has relatively large particle size. As a result, the production of dendrites and the micronization of alloys may be more effectively inhibited. In addition, during the charge/discharge, lithium is occluded and released in the order of large size particles, small size particles and large size particles, and consequently the generation of residual stress and distortion is inhibited. For example, the average particle size of metal (a) may be 20µm or less, preferably 15µm or less.

As the negative electrode bonding agent, polyfluorovinylidene, vinylidene fluoride-hexafluoropropylene copolymer, vinylidene fluoride-tetrafluoroethylene copolymer, styrenebutadiene copolymer rubber, polytetrafluoroethylene, polypropylene, polyethylene, polyimides, polyamideimides or the like may be used. Among these, polyimides and polyamideimides are preferred since they have high adhesion. A content of the a negative electrode bonding agent used is preferably 5-25 parts by weight with respect to 100 parts by weight of the negative electrode active material in terms of 'sufficient adhesion' and 'high energization' which are traded off each other.

As the negative electrode current collector, it is preferred to use nickel, aluminum, copper, silver, or any alloy thereof in terms of electrochemical stability. The negative electrode current collector may be used in the form of a foil, a plate or a mesh.

The negative electrode may be fabricated by forming a negative electrode active material layer comprising a negative electrode active material and a negative electrode bonding agent onto a negative electrode current collector. As a method for forming the negative electrode active material layer, a doctor blade method, a die coater method, a CVD method, a sputtering method or the like may be used. Otherwise, the negative electrode active material layer is firstly formed, and subsequently the negative electrode current collector may be made by forming a thin film of aluminum, nickel or any alloy thereof using a method such as vapor deposition or sputtering.

### [2] Positive electrode

A positive electrode is made, for example by attaching a positive electrode active material over a positive electrode current collector using a positive electrode bonding agent.

As the positive electrode active material, lithium manganates having a layered structure such as LiMnO₂ and LiₓMn₂O₄ (0<x<2) or lithium manganates having a spinel-like structure; LiCoO₂ LiNiO₂ or the foregoing compounds in which transition metals are partially replaced by other metals; lithium transition metal oxides in which a certain transition metal constitutes less than half of the whole structure such as LiNi_{1/3}Co_{1/3}Mn_{1/3}O₂; and the foregoing lithium transition metal oxides in which Li is used at an amount greater than stoichiometric account may be used. Particularly, it is preferred to use Li_{α}Ni_{β}Co_{γ}Al₅O₂ (1≤α≤1.2, β+γ+δ=1, β≥0.7, γ≤0.2) or Li_{α}Ni_{β}Co_{γ}Mn_{δ}O₂(1≤α≤1.2, β-γ+δ=1, β≥0.6, γ≤0.2). The positive electrode active materials may be used alone or in a combination of two or more species.

The positive electrode bonding agent may use the same binder as the negative electrode bonding agent. Particularly, it is preferred to use polyfluorovinylidene in terms of various uses or low costs. A content of the positive electrode bonding agent used is preferably 2-10 parts by weight with respect to 100 parts by weight of the positive electrode active material in terms of 'sufficient adhesion' and 'high energization' which are traded off each other.

The positive electrode current collector may use the same current collector as the negative electrode current collector in materials, shapes or the like.

To reduce impedance, an electroconductive assisting agent may be added to a positive electrode active material layer comprising a positive electrode active material. As the electroconductive assisting agent, carbonaceous fine particles such as graphite, carbon black or acetylene black may be used.

### [3] Electrolyte

According to the present invention, the electrolyte comprises 70-99 vol% of a phosphoric acid ester compound and 1-15 vol% of a fluorinated compound. A content of the phosphoric acid ester compound is preferably 85-98 vol%, and more preferably 90-97 vol%. A content of the fluorinated compound is preferably 2-15 vol%, and more preferably 3-10 vol%.

As said phosphoric acid ester compound, compounds represented by the following formula (1) may be exemplified. 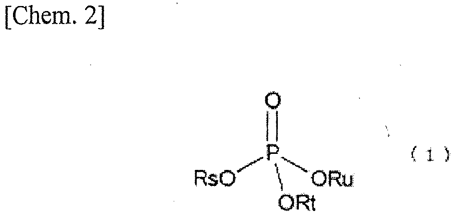 In the formula (1) above, each of Rs, Rt or Ru is independently alkyl group, alkyl halide, alkenyl group, alkenyl halide, aryl group, cycloalkyl group, cycloalkyl halide or silyl group, or any two or all of Rs, Rt and Ru may be bonded to form a cyclic structure. Preferably, these alkyl groups, alkyl halides, alkenyl groups, alkenyl halides, aryl groups, cycloalkyl groups and cycloalkyl halides have at most 10 carbon atoms. Alkyl halides, alkenyl halides and cycloalkyl halides may have fluorine, chlorine, bromine and iodine as halogen atoms. Preferably, all of Rs, Rt and Ru are alkyl groups having at most 10 carbon atoms.

Specific examples of such phosphoric acid ester compounds may include alkyl phosphoric acid ester compounds such as trimethyl phosphate, triethyl phosphate, tripropyl phosphate, tributyl phosphate, tripentyl phosphate, trihexyl phosphate, triheptyl phosphate, trioctyl phosphate, dimethyl ethyl phosphate (also referred as dimethyl ethyl phosphonic acid), dimethyl methyl phosphate (DMMP) (also referred as dimethyl methyl phosphonic acid), diethylmethyl phosphate or the like; aryl phosphate ester compounds such as triphenyl phosphate or the like; cyclic phosphoric acid ester compounds such as methylethylene phosphate, ethylethylene phosphate (EEP), ethylbutylene phosphate or the like; halogenated alkyl phosphoric acid ester compounds such as tris(trifluoromethyl) phosphate, tris(pentafluoroethyl) phosphate, tris(2,2,2-trifluoroethyl) phosphate, tris(2,2,3,3-tetrafluoropropyl) phosphate, tris(3,3,3-trifluoropropyl) phosphate, tris(2,2,3,3,3-pentafluoropropyl) phosphate or the like. Among these, it is particularly preferred to use alkyl phosphoric acid ester compounds such as trimethyl phosphate, triethyl phosphate, tripropyl phosphate, tributyl phosphate, tripentyl phosphate, trihexyl phosphate, triheptyl phosphate, trioctyl phosphate or the like as phosphoric acid ester compounds. These phosphoric acid ester compounds may be used alone or in any combination of at least two species. In the context of the presently claimed invention the phosphoric acid ester compound comprises triethyl phosphate.

Additionally, if a phosphoric acid ester compound have many fluorine atoms, it is difficult to dissolve lithium salts used as a supporting salt. Therefore, these phosphoric acid ester compounds have preferably no fluorine atom.

The fluorinated carbonate compound may be fluorinated cyclic carbonate compounds or fluorinated chain-type carbonate compounds. These fluorinated carbonate compounds may be used alone or in any combination of at least two species.

As said fluorinated cyclic carbonate compounds, compounds represented by the following formula (2a) or (2b) may be exemplified.

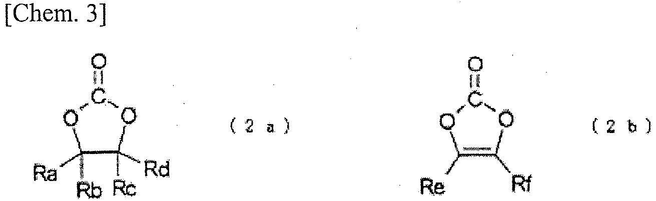

In the formula (2a) or (2b) above, each of Ra, Rb, Rc, Rd, Re or Rf is independently hydrogen, alkyl group, alkyl halide, halogen atom, alkenyl group, alkenyl halide, cyano group, amino group, nitro group, alkoxy group, alkoxy halide, cycloalkyl group, cycloalkyl halide or silyl group. Also, at least one of Ra, Rb, Rc and Rd should be fluorine atoms, fluorinated alkyl groups, fluorinated alkenyl groups, fluorinated alkoxy groups or fluorinated cycloalkyl groups, and at least one of Re and Rf should be fluorine atoms, fluorinated alkyl groups, fluorinated alkenyl groups, fluorinated alkoxy groups or fluorinated cycloalkyl groups. Alkyl groups, alkyl halides, alkenyl groups, alkenyl halides, alkoxy groups, alkoxy halides, cycloalkyl groups and cycloalkyl halides have preferably at most 10 carbon atoms, and more preferably at most 5 carbon atoms. Alkyl halides, alkenyl halides, alkoxy halides and cycloalkyl halides may have fluorine, chlorine, bromine or iodine as halogen atoms.

Examples of such fluorinated cyclic carbonate compounds may include compounds such as ethylene carbonate, propylene carbonate, vinylene carbonate or vinylethylene carbonate which all or parts of these compounds are fluorinated. Among these, it is particularly preferred to use compounds such as fluoroethylene carbonate, cis- or trans-difluoroethylene carbonate or the like which parts of ethylene carbonate are fluorinated, and more preferably fluoroethylene carbonate. In the context of the presently claimed invention the fluorinated carbonate compound comprises fluoroethylene carbonate.

As said fluorinated chain-type carbonate compounds, compounds represented by the following formula (3) may be exemplified.

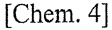

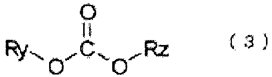

In the formula (3) above, each of Ry or Rz is independently hydrogen, alkyl group, alkyl halide, halogen atom, alkenyl group, alkenyl halide, cyano group, amino group, nitro group, alkoxy group, alkoxy halide, cycloalkyl group, cycloalkyl halide or silyl group. Also, at least one of Ry and Rz should be fluorine atoms, fluorinated alkyl groups, fluorinated alkenyl groups, fluorinated alkoxy groups or fluorinated cycloalkyl groups. Alkyl groups, alkyl halides, alkenyl groups, alkenyl halides, alkoxy groups, alkoxy halides, cycloalkyl groups and cycloalkyl halides have preferably at most 10 carbon atoms, and more preferably at most 5 carbon atoms. Alkyl halides, alkenyl halides, alkoxy halides and cycloalkyl halides may have fluorine, chlorine, bromine or iodine as halogen atoms.

Examples of such fluorinated chain-type carbonate compounds may include bis(1-fluoroethyl) carbonate, bis(2-fluoroethyle) carbonate, 3-fluoropropylmethyl carbonate or 3,3,3-trifluoropropylmethyl carbonate.

The electrolytes used in the present invention may further comprise other organic solvents. Examples of these organic solvents may include aliphatic carboxylic acid esters such as ethylene carbonate (EC), propylene carbonate (PC), butylenes carbonate (BC), vinylene carbonate (VC), vinylethylene carbonate (VEC), ethylene sulfite (ES), propane sultone (PS), butane sultone (BS), dioxathiolane-2,2-dioxide (DD), sulfolene, 3-methyl sulfolene, sulfolane (SL), succinic anhydride (SUCAH), propionic anhydride, acetic anhydride, maleic anhydride, diallyl carbonate (DAC), diphenyl sulfide (DPS), dimethyl carbonate (DMC), ethylmethyl carbonate (EMC), chloroethylene carbonate, diethyl carbonate (DEC), dimethoxy ethane (DME), dimethoxy methane (DMM), diethoxy ethane (DEE), ethoxymethoxy ethane, dimethyl ether, methylethyl ether, methylpropyl ether, ethylpropyl ether, dipropyl ether, methylbutyl ether, diethyl ether, phenylmethyl ether, tetrahydrofuran (THF), tetrahydropyran (THP), 1,4-dioxane (DIOX), 1,3-dioxolane (DOL), carbonate electrolytes, ether, acetonitrile, propionitrile, γ-butyrolactone, γ-valerolactone, ionic liquids, phosphagen, methyl formate, methyl acetate, ethyl propionate or the like, or those which some hydrogen atoms of these compounds are replaced by fluorine atoms. Among these, it is particularly preferred to use ethylene carbonate, diethyl carbonate, propylene carbonate, dimethyl carbonate, ethylmethyl carbonate, γ-butyrolactone or γ-valerolactone. A content of other organic solvents is preferably 1 vol% or more in terms of sufficient capacity increase, and the content is preferably 30 vol% or less in terms of avoiding dramatic temperature change. These other organic solvents may be used alone or in any combination of at least two species.

The electrolytes used in the present invention comprise supporting salts. Specific examples of such supporting salts may include LiPF₆, LiI, LiBr, LiCl, LiAsF₆, LiAlCl₄, LiClO₄, LiBF₄, LiSbF₆, LiCF₃SO₃, or LiC₄F₉SO₃, as well as LiN(FSO₂)₂, LiN(CF₃SO₂)₂, LiN(C₂F₅SO₂)₂, LiN(CF₃SO₂)(C₂F₅SO₂), or LiN(CF₃SO₂)(C₄F₉SO₂) which comprise imide anion, LiN(CF₂SO₂)₂(CF₂) having 5-membered cyclic structure, LiN(CF₂SO₂)₂(CF₂)₂ having 6-membered cyclic structure, or the like. Also, lithium salts such as LiPF₅(CF₃), LiPF₅(C₂F₅), LiPF₅(C₃F₇), LiPF₄(CF₃)₂, LiPF₄(CF₃)(C₂F₅) and LiPF₃(CF₃)₃ which at least one fluorine atom of LiPF₆ is replaced by fluorinated alkyl groups. In addition, as supporting salts, compounds represented by the following formula (4) may be used.

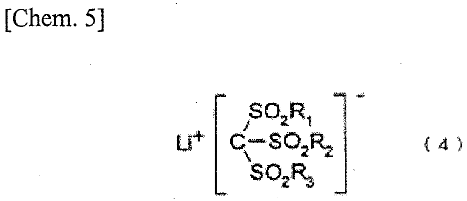

In the formula (4) above, each of R₁, R₂ or R₃ is independently halogen atom or fluorinated alkyl group. The halogen atoms may include fluorine, chlorine, bromine or iodine. The fluorinated alkyl group has preferably 1-10 carbon atoms. Specific examples of compounds represented by the formula (4) may include LiC(CF₃SO₂)₃ or LiC(C₂F₅SO₂)₃. These supporting salts may be used alone or in any combination of at least two species. For example, LiPF₆ may be used in admixture with salts comprising imide anion having high thermal decomposition temperature, for example, such as LiN(FSO₂)₂, LiN(CF₃SO₂)₂, LiN(C₂F₅SO₂)₂, LiN(CF₃SO₂)(C₂F₅SO₂) or LiN(CF₃SO₂)(C₄F₉SO₂).

A concentration of such supporting salts in an electrolyte is preferably at least 0.01M (mol/L) and at most 3M (mol/L), and more preferably at least 0.5M (mol/L) and at most 1.5M (mol/L).

### [4] Separator

As the separator, porous films or non-woven fabric of polyethylene or polyethylene may be used. In addition, a laminate formed from these materials may be used as the separator.

### [5] Outer Casing

Any of outer casings may be used as long as it is stable in the electrolyte and has enough moisture barrier property. For example, as the outer casings for layered laminate type secondary batteries, laminate film formed from aluminum, silica-coated polypropylene, polyethylene or the like may be used. Particularly, it is preferred to use an aluminum laminate film in terms of inhibiting a volume change.

In case of a secondary battery using a laminate film as an outer casing, the collapse of electrode element is increased upon generating gases when compared to a secondary battery using a metal can as an outer casing. This is because the laminate film may easily be deformed by the internal pressure of secondary battery relative to the metal can. In addition, a secondary battery using a laminate film casing is sealed without a spare space therein so that the internal pressure of battery is maintained at a value lower than atmospheric pressure. Therefore, the generated gases may lead to a volume change of battery or a deformation of electrode element directly.

By using the secondary battery according to the present invention, this problem can be overcome. Thus, according to the present invention, it can be provided a layered laminate type lithium ion secondary battery having good flexibility in designing cell capacity with varying the number of layers as well as available with low costs.

### EXAMPLES

Now, the present invention will be described in detail with reference to Examples.

### (Charge-discharge evaluation)

### (Example 1)

A composite of silicon-silicon oxide-carbon (a negative electrode active material) was obtained by subjecting silicon oxide represented by formula SiO-silicon mix powder (a mixture of silicon oxides and silicon) to CVD over 6 hours at 1150°C under an atmosphere comprising methane gas to produce a dispersion of silicon nanoclusters in silicon oxides and coating their surfaces with carbons. The weight ratio of silicon/silicon oxide/carbon was adjusted to approximately 29/61/10.

Said negative electrode active material (the average particle size: D₅₀ = 5µm) and polyimide (trade mark: U Varnish A - from UBE MACHINERY CORPORATION, LTD.) as a negative electrode bonding agent were weighed at the weight ratio of 90:10 and they were mixed with n-methylpyrrolidone to prepare negative electrode slurry. Then, the negative electrode slurry was applied and dried on a copper foil having 10µm thickness, and it was subjected to heat treatment at 300°C under nitrogen atmosphere to fabricate a negative electrode.

A lithium nickelates (LiNi_{0.80}Co_{0.15}Al_{0.15}O₂), carbon black as an electroconductive assisting agent carbon black and polyfluorovinylidene as a positive electrode bonding agent were weighed at the weight ratio of 90:5:5. These materials were mixed with n-methylpyrrolidone to prepare positive electrode slurry. Then, the positive electrode slurry was applied and dried on an aluminum foil having 20µm thickness, and it was pressed to fabricate a positive electrode.

Three positive electrode layers and four negative electrode layers were alternately stacked with porous polypropylene films sandwiched between each positive electrode layer and each negative electrode layer as a separator. The ends of positive electrode current collectors without coating with the positive electrode active materials were each welded and the ends of negative electrode current collectors without coating with the negative electrode active materials were welded. In addition, an aluminum positive electrode terminal was welded at the corresponding welding point and a nickel negative electrode terminal was welded at the corresponding welding point. Thus, an electrode element having a plane shape layered structure was obtained.

An electrolyte was prepared by mixing triethyl phosphate (TEP) and fluoroethylene carbonate (FEC) at the ratio of 99:1 of volume ratio and dissolving additionally LiPF₆ at the concentration of 1mol/L as a supporting salt. The resulting mixture was used as an electrolyte.

The electrode element was wrapped using an aluminum laminate film as an outer casing and the electrolyte was injected into the inside of the electrode element. Then, the outer casing was sealed while reducing the pressure to 0.1 atmospheres to fabricate a secondary battery.

### (Charge-discharge evaluation)

The charge-discharge of the resulting secondary battery was performed using the voltage set as the upper limit 4.2V and the lower limit 2.7V and the current set as 0.2C at 20°C and the prime discharging capacity was measured. The results are shown in Table 1.

### (Impact test)

An aluminum laminate cell was fabricated using the same method as set forth above except for arranging one positive electrode layer and one negative electrode layer with a separator sandwiched therebetween and injecting an electrolyte. After conditioning the resulting cell, the cell was charged to the upper limit voltage 4.3V at the current of 0.2C, and the temperature of the cell was measured using a thermocouple attached to the outer surface of the cell. Also, the charged cell was subjected to impact by dropping 5kg weight at 50cm height, and the temperature of the cell was measured using a thermocouple attached to the outer surface of the cell. An increased temperature of the cell after this impact test (= (a highest temperature of the cell after the impact test) - (a temperature of the cell before the impact test) was calculated. The results are shown in Table 1.

### (Example 2)

A secondary battery was fabricated using the same method as in Example 1 provided that a mixture of TEP and FEC of 98:2 in volume ratio is used as an electrolyte and 1mol/L LiPF₆ in the electrolyte is further used as a supporting salt. The results are shown in Table 1.

### (Example 3)

A secondary battery was fabricated using the same method as in Example 1 provided that a mixture of TEP and FEC of 95:5 in volume ratio is used as an electrolyte and 1mol/L LiPF₆ in the electrolyte is further used as a supporting salt. The results are shown in Table 1.

### (Example 4)

A secondary battery was fabricated using the same method as in Example 1 provided that a mixture of TEP and FEC of 90:10 in volume ratio is used as an electrolyte and 1mol/L LiPF₆ in the electrolyte is further used as a supporting salt. The results are shown in Table 1.

### (Example 5)

A secondary battery was fabricated using the same method as in Example 1 provided that a mixture of TEP, ethylene carbonate (EC)/diethyl carbonate (DEC) of 3/7 in volume ratio and FEC of 75:10:15 in volume ratio is used as an electrolyte and 1mol/L LiPF₆ in the electrolyte is further used as a supporting salt. The results are shown in Table 1.

### (Example 6)

A secondary battery was fabricated using the same method as in Example 1 provided that a mixture of TEP, EC/DEC and FEC of 70:28:2 in volume ratio is used as an electrolyte and 1mol/L LiPF₆ in the electrolyte is further used as a supporting salt. The results are shown in Table 1.

### (Example 7)

A secondary battery was fabricated using the same method as in Example 1 provided that a mixture of TEP and FEC of 95:5 in volume ratio is used as an electrolyte, 1mol/L LiPF₆ in the electrolyte is further used as a supporting salt, and the weight ratio of silicon/silicon oxide/carbon used in a negative electrode active material is adjusted to approximately 25/60/15. The results are shown in Table 1.

### (Example 8)

A secondary battery was fabricated using the same method as in Example 1 provided that a mixture of TEP and FEC of 95:5 in volume ratio is used as an electrolyte, 1mol/L LiPF₆ in the electrolyte is further used as a supporting salt, and the weight ratio of silicon/silicon oxide/carbon used in a negative electrode active material is adjusted to approximately 20/50/30. The results are shown in Table 1.

### (Example 9)

A secondary battery was fabricated using the same method as in Example 1 provided that a mixture of TEP and FEC of 95:5 in volume ratio is used as an electrolyte, 1mol/L LiPF₆ in the electrolyte is further used as a supporting salt, and the weight ratio of silicon/silicon oxide/carbon used in a negative electrode active material is adjusted to approximately 15/35/50. The results are shown in Table 1.

### (Example 10)

A secondary battery was fabricated using the same method as in Example 1 provided that a mixture of TEP and FEC of 95:5 in volume ratio is used as an electrolyte, 1mol/L LiPF₆ in the electrolyte is further used as a supporting salt, and the weight ratio of silicon/silicon oxide/carbon used in a negative electrode active material is adjusted to approximately 15/30/55. The results are shown in Table 1.

### (Example 11)

A secondary battery was fabricated using the same method as in Example 1 provided that a mixture of TEP and FEC of 98:2 in volume ratio is used as an electrolyte and 1mol/L LiN(CF₃SO₂)₂(LiTFSI) in the electrolyte is further used as a supporting salt. The results are shown in Table 1.

### (Comparative example 1)

A secondary battery was fabricated using the same method as in Example 1 provided that a mixture of TEP and EC/DEC of 75:25 in volume ratio is used as an electrolyte and 1mol/L LiPF₆ in the electrolyte is further used as a supporting salt. The results are shown in Table 1.

### (Comparative example 2)

A secondary battery was fabricated using the same method as in Example 1 provided that a mixture of TEP and EC/DEC of 90:10 in volume ratio is used as an electrolyte and 1mol/L LiPF₆ in the electrolyte is further used as a supporting salt. The results are shown in Table 1.

### (Comparative example 3)

A secondary battery was fabricated using the same method as in Example 1 provided that a mixture of TEP and EC/DEC of 99:1 in volume ratio is used as an electrolyte and 1mol/L LiPF₆ in the electrolyte is further used as a supporting salt. The results are shown in Table 1.

### (Comparative example 4)

A secondary battery was fabricated using the same method as in Example 1 provided that 1mol/L LiPF₆ as a supporting salt in TEP is used as an electrolyte. The results are shown in Table 1.

### (Comparative example 5)

A secondary battery was fabricated using the same method as in Example 1 provided that a mixture of EC/DEC and FEC of 98:2 in volume ratio is used as an electrolyte and 1mol/L LiPF₆ in the electrolyte is further used as a supporting salt. The results are shown in Table 1.

### (Comparative example 6)

A secondary battery was fabricated using the same method as in Example 1 provided that a mixture of TEP, EC/DEC and FEC of 65:34:1 in volume ratio is used as an electrolyte and 1mol/L LiPF₆ in the electrolyte is further used as a supporting salt. The results are shown in Table 1.

### (Comparative example 7)

A secondary battery was fabricated using the same method as in Example 1 provided that a mixture of TEP, EC/DEC and FEC of 65:20:15 in volume ratio is used as an electrolyte and 1mol/L LiPF₆ in the electrolyte is further used as a supporting salt. The results are shown in Table 1.

### (Comparative example 8)

A negative electrode was fabricated by mixing artificial graphite as a negative electrode active material and polyfluorovinylidene as a negative electrode bonding agent at the weight ratio of 90:10, dispersing the resulting mixture in N-methylpyrrolidone (NMP) to form a slurry, applying the slurry on a copper foil having 10µm thickness, and drying it. The same procedure as in Example 1 was performed using this negative electrode provided that a mixture of TEP and FEC of 99:1 in volume ratio is used as an electrolyte and 1mol/L LiPF₆ in the electrolyte is further used as a supporting salt. The results are shown in Table 1.

### (Comparative example 9)

A secondary battery was fabricated using the same method as in Comparative example 8 provided that a mixture of TEP and FEC of 98:2 in volume ratio is used as an electrolyte and 1mol/L LiPF₆ in the electrolyte is further used as a supporting salt. The results are shown in Table 1.

### (Comparative example 10)

A secondary battery was fabricated using the same method as in Comparative example 8 provided that a mixture of TEP and FEC of 95:5 in volume ratio is used as an electrolyte and 1mol/L LiPF₆ in the electrolyte is further used as a supporting salt. The results are shown in Table 1.

### (Comparative example 11)

A secondary battery was fabricated using the same method as in Comparative example 8 provided that a mixture of TEP and FEC of 90:10 in volume ratio is used as an electrolyte and 1mol/L LiPF₆ in the electrolyte is further used as a supporting salt. The results are shown in Table 1.

**[Table 1]**

| | Negative electrode active material | Electrolyte | | | | | | Prime discharging capacity | Temp. increased after impact test |
|---|---|---|---|---|---|---|---|---|---|
| | Si/SiO/C | Phosphate ester | | Non-fluorinated carbonate | | fluorinated carbonate | | | |
| | Weight ratio | Type | vol % | Type | vol % | Type | vol% | (mAh) | (°C) |
| Example 1 | 29/61/10 | TEP | 99 | - | - | FEC | 1 | 2065 | 0.9 |
| Exmple 2 | 29/61/10 | TEP | 98 | - | - | FEC | 2 | 2298 | 0.7 |
| Exmple 3 | 29/61/10 | TEP | 95 | - | - | FEC | 5 | 2350 | 0.6 |
| Exmple 4 | 29/61/10 | TEP | 90 | - | - | FEC | 10 | 2280 | 1.1 |
| Exmple 5 | 29/61/10 | TEP | 75 | EC/D EC | 10 | FEC | 15 | 2168 | 2.0 |
| Exmple 6 | 29/61/10 | TEP | 70 | EC/D EC | 28 | FEC | 2 | 2311 | 2.9 |
| Exmple 7 | 25/60/15 | TEP | 95 | - | - | FEC | 5 | 2249 | 0.6 |
| Exmple 8 | 20/50/30 | TEP | 95 | - | - | FEC | 5 | 1762 | 0.3 |
| Exmple 9 | 15/35/50 | TEP | 95 | - | | FEC | 5 | 1158 | 0.2 |
| Exmple 10 | 15/30/55 | TEP | 95 | - | - | FEC | 5 | 826 | 0.2 |
| Exmple 11 | 29/61/10 | TEP | 98 | - | - | FEC | 2 | 2112 | 0.6 |
| Com. Ex. 1 | 29/61/10 | TEP | 75 | EC/D EC | 25 | - | - | 21 | - |
| Com. Ex. 2 | 29/61/10 | TEP | 90 | EC/D EC | 10 | - | - | 15 | - |
| Com. Ex. 3 | 29/61/10 | TEP | 99 | EC/D EC | 1 | - | - | 14 | - |
| Com. Ex. 4 | 29/61/10 | TEP | 10 0 | - | - | - | - | 0 | - |
| Com. Ex. 5 | 29/61/10 | TEP | 0 | EC/D EC | 98 | FEC | 2 | 2374 | 29 |
| Com. Ex. 6 | 29/61/10 | TEP | 65 | EC/D EC | 34 | FEC | 1 | 2340 | 11 |
| Com. Ex. 7 | 29/61/10 | TEP | 65 | EC/D EC | 20 | FEC | 15 | 2219 | 7.6 |
| Com. Ex. 8 | 0/0/100 | TEP | 99 | - | - | FEC | 1 | 0 | - |
| Com. Ex. 9 | 0/0/100 | TEP | 98 | - | - | FEC | 2 | 0 | - |
| Com. Ex. 10 | 0/0/100 | TEP | 95 | - | - | FEC | 5 | 1 | - |
| Com. Ex. 11 | 0/0/100 | TEP | 90 | - | - | FEC | 10 | 5 | - |

When using the electrolyte comprising TEP but not comprising FEC, the battery was not operated or the prime discharging capacity was extremely low as shown by Comparative examples 1 to 4. It is believed that this phenomenon was attributed to the decomposition of TEP. However, we found that the batter was operated and the prime discharging capacity was increased by adding a few amount of FEC to TEP as shown by Examples 1 to 4. This effect could be not observed when only graphite was used as a negative electrode active material as shown by Comparative examples 11 to 14. It was observed as a unique effect only when using a negative electrode active material comprising Si or SiO. It is believed that this effect resulted from forming a thin film susceptible to reacting with lithium ions in the electrolyte on surfaces of Si or SiO. In this case, the content of FEC should be 15 vol% or less since FEC has a high viscosity.

Also, when using a material comprising Si/SiO/C as a negative electrode active material, it was demonstrated that the prime discharging capacity was decreased as the content of carbon was increased as shown by Examples 7 to 10. Therefore, the content of carbon is preferably 50 wt% or less, and more preferably 30 wt% or less.

From the results of said impact test, it was demonstrated that cells using electrolytes comprising TEP of 70 vol% or more exhibit a small change in the temperature of cell after the impact test as shown by Examples 1 to 10. To the contrary, it was demonstrated that it was demonstrated that cells using electrolytes comprising TEP of less than 70 vol% exhibit a large change in the temperature of cell after the impact test as shown by Comparative examples 5 to 7.

In addition, when adding salts comprising imide anion such as LiN(CF₃SO₂)₂ as a supporting salt, it is believed that these salts can contribute to thermal stability upon impact since they have high thermal decomposition temperature as shown by Example 11.

In general, as the temperature of cell is increased, the viscosity of electrolyte is lowered and the ion conductivity is increased. Therefore, an increase in cell temperature is desirable phenomenon in terms of battery properties. However, a dramatic increase of cell temperature results in the deterioration of active materials and the evaporation of electrolyte so as to deplete liquids. Further, when a secondary battery is embedded into a device, a dramatic temperature increase due to impact may adversely affect IC circuits or peripheral devices. For this reason, by using a cell in which the temperature increase by impact is low, a need for other devices such as a temperature controller may be eliminated.

### (Thermal stability test)

The same aluminum laminate cells as in Examples 2, 11 and Comparative example 5 used in the impact test were fabricated. They were subjected to conditioning, and were charged to the upper limit voltage 4.2 V at the current of 0.2 C. Then, these cells were allowed to leave under 150°C condition. After 3 hours, the voltage changes of cells were measured. The results are shown in Table 2.

**[Table 2]**

| | Voltage (V) lowered under high temperature maintenance |
|---|---|
| Example 2 | 0.2 |
| Example 11 | 0.1 |
| Com. Example 5 | 2.1 |

In the high temperature maintenance test at 150°C, a decrease in voltage was not almost observed when using the electrolytes with TEP and FEC as a solvent as shown by Examples 2 and 11. To the contrary, when using the electrolytes with EC, DEC and FEC as a solvent, the voltage after the maintenance test was decreased as low as 2.1 V compared to the voltage before the maintenance test as shown by Comparative example 5. It is considered that the interior of cell was filled with gases derived from DEC having the boiling point of 126°C, and the dissolution of separator or the dislocation of electrodes partially caused the contact of electrodes, resulting in lowering voltage. However, when using TEP or FEC having the boiling point greater than 200°C as a solvent, it is believed that gas was not generated at all and the contact of electrodes was not caused. In addition, it can be seen that a decrease in voltage is low when using electrolytes with LiTFSI having high thermal stability as a supporting salt.

### Industrial applicability

The present invention can be used in all industrial areas for which electric power is necessary, and any industrial area to which the transfer, storage and supply of electric energy is related. Particularly, the present invention can be used as power for mobile devices such as mobile phones, notebook computers or the like; power for travel/transfer means such as tanks, satellites, submarines or the like including motor vehicles such as electric cars, hybrid cars, electric powered bikes, electric powered bicycles or the like; power for backup of UPS or the like; power storage facilities for storing electric power generated by solar photovoltaic generation, wind power generation or the like; or the like.

## Claims

1. A secondary battery comprising:
an electrode element having a positive electrode and a negative electrode opposed each other,
an electrolyte and
an outer casing containing said electrode element and said electrolyte,
**characterized in that** said negative electrode comprises a composite negative electrode active material, which includes a metal (a) capable of alloying with lithium, a metal oxide (b) capable of occluding and releasing lithium ions and a carbon material (c), is bonded to a negative electrode current collector by a negative electrode bonding agent,
said electrolyte comprises 70∼99 vol% of a phosphoric acid ester compound and 1∼15 vol% of a fluorinated carbonate compound, and
said phosphoric acid ester compound comprises triethyl phosphate, and
said fluorinated carbonate compound comprises fluoroethylene carbonate.

2. The secondary battery according to Claim 1 wherein said electrolyte comprises a supporting salt comprising imide anion.

3. The secondary battery according to Claim 1 or 2 wherein said negative electrode bonding agent is polyimide or polyamideimide.

4. The secondary battery according to any one of Claims 1 to 3 wherein said electrode element has a layered laminate structure.

## Patentansprüche

1. Sekundärbatterie, die Folgendes umfasst:
ein Elektrodenelement, das eine positive Elektrode und eine negative Elektrode, die einander gegenüberliegen, aufweist,
einen Elektrolyten und
ein äußeres Gehäuse, welches das Elektrodenelement und den Elektrolyten enthält,
**dadurch gekennzeichnet, dass** die negative Elektrode ein negatives aktives Elektrodenverbundmaterial umfasst, das ein Metall (a), das in der Lage ist, sich mit Lithium legieren zu lassen, ein Metalloxid (b), das in der Lage ist, Lithiumionen einzuschließen und freizusetzen, und ein Kohlenstoffmaterial (c) einschließt und durch ein Bindemittel für eine negative Elektrode an einen Stromsammler für eine negative Elektrode gebunden ist,
der Elektrolyt 70 - 99 Volumenprozent einer Phosphorsäureesterverbindung und 1 - 15 Volumenprozent einer fluorierten Carbonatverbindung umfasst und
die Phosphorsäureesterverbindung Triethylphosphat umfasst und die fluorierte Carbonatverbindung Fluorethylencarbonat umfasst.

2. Sekundärbatterie gemäß Anspruch 1, wobei der Elektrolyt ein Hilfssalz, das Imidanion umfasst, umfasst.

3. Sekundärbatterie gemäß Anspruch 1 oder 2, wobei das Bindemittel für eine negative Elektrode Polyimid oder Polyamidimid ist.

4. Sekundärbatterie gemäß einem der Ansprüche 1 bis 3, wobei das Elektrodenelement eine geschichtete Laminatstruktur aufweist.

## Revendications

1. Batterie secondaire comprenant :
un élément d'électrode ayant une électrode positive et une électrode négative opposées l'une à l'autre,
un électrolyte et
un boîtier extérieur contenant ledit élément d'électrode et ledit électrolyte,
**caractérisée en ce que** ladite électrode négative comprend un matériau actif d'électrode négative en composite, qui comporte un métal (a) capable de s'allier à du lithium, un oxyde de métal (b) capable d'insérer et de libérer des ions lithium et un matériau carboné (c) et est liée à un collecteur de courant d'électrode négative par un agent de liaison d'électrode négative,
ledit électrolyte comprend 70 à 99 % en volume d'un composé ester d'acide phosphorique et 1 à 15 % en volume d'un composé carbonate fluoré, et
ledit composé ester d'acide phosphorique comprend du phosphate de triéthyle, et
ledit composé carbonate fluoré comprend du carbonate de fluoroéthylène.

2. Batterie secondaire selon la revendication 1, dans laquelle ledit électrolyte comprend un sel de support comprenant un anion imide.

3. Batterie secondaire selon la revendication 1 ou 2, dans laquelle ledit agent de liaison d'électrode négative est du polyimide ou du polyamideimide.

4. Batterie secondaire selon l'une quelconque des revendications 1 à 3, dans laquelle ledit élément d'électrode a une structure stratifiée en couches.
